# EUROPÄISCHE PATENTSCHRIFT

(11) **EP 2 676 631 B1**
(45) Veröffentlichungstag und Bekanntmachung des Hinweises auf die Patenterteilung: **13.07.2016**
(21) Anmeldenummer: 13003059.6
(22) Anmeldetag: 14.06.2013
(51) Int. Cl.: A61C 8/00

(54) **Zweiteiliges Dentalimplantat**
Two-part dental implant
Implant dentaire en deux parties

(30) Priorität: 21.06.2012 DE 102012012494
(43) Veröffentlichungstag der Anmeldung: 25.12.2013
(73) Patentinhaber: FairImplant GmbH, 25474 Bönningstedt (DE)
(72) Erfinder: Thurow, Jörn, 25474 Ellerbek (DE)
(74) Vertreter: Hoefer & Partner Patentanwälte mbB

(56) Entgegenhaltungen:
- EP-A1- 1 728 486
- EP-B1- 0 837 658
- WO-A1-03/030767
- WO-A2-2004/073541
- DE-A1-102009 027 044

## Beschreibung

Die Erfindung bezieht sich auf ein zweiteiliges Dentalimplantat gemäß den Merkmalen des Oberbegriffs des Anspruchs 1.

Im Einzelnen bezieht sich die Erfindung auf ein zweiteiliges Dentalimplantat mit einem Implantatteil, welcher mit einem Außengewinde versehen ist und in einen Oberkiefer oder einen Unterkiefer eines Patienten einschraubbar ist. Das erfindungsgemäße Dentalimplantat umfasst weiterhin einen Aufbauteil, welcher mittels einer Befestigungsschraube an dem Implantatteil befestigbar ist. Der Aufbauteil (Abutment) dient dazu, eine künstliche Zahnkrone zu tragen. Zwischen dem Implantatteil und dem Abutment erfolgt eine verdrehsichere und dichte Kopplung, welche so ausgebildet ist, dass sie lösbar ist. Dies ist insbesondere während der weiteren Präparationsschritte erforderlich, nachdem der Implantteil eingesetzt wurde, um Abdrücke zu fertigen und den weiteren Zahnaufbau, insbesondere die Zahnkrone fertigen zu können.

Zum Stand der Technik wird beispielshaft auf die DE 10 2009 027 044 A1 verwiesen.

Erfindungsgemäß ist vorgesehen, dass der Implantatteil mit einer zentrischen Ausnehmung versehen ist, welche ein Innengewinde aufweist, in welches eine Befestigungsschraube einschraubbar ist, welche den Aufbauteil durchgreift. Um eine exakte Positionierung des Aufbauteils an dem Implantatteil sicherzustellen, ist sowohl an dem Implantatteil im Bereich der zentrischen Ausnehmung als auch an dem Aufbauteil jeweils ein Verdrehsicherungsbereich vorgesehen. Dieser kann polygonal ausgebildet sein und Auswölbungen und Einbuchtungen aufweisen, so wie dies in der oben genannten Druckschrift gezeigt ist. Der Verdrehsicherungsbereich des Aufbauteils ist dabei an einem rohrförmigen oder zapfenförmigen Ansatz des Aufbauteils ausgebildet, welcher in die zentrische Ausnehmung des Implantatteils einsteckbar ist.

Bei den aus dem Stand der Technik bekannten Konstruktionen ist zwischen den beiden Verdrehsicherungsbereichen des Implantatteils und des Aufbauteils ein Spiel vorhanden. Dieses ist technisch notwendig, um den Aufbauteil an dem Implantatteil zu befestigen, ohne dass es zu einem Festklemmen oder einem Presssitz kommt. Dies ist insbesondere wichtig, weil der Zahnarzt und/oder der Zahntechniker während der Präparationsschritte den Aufbauteil mehrmals entnehmen und anschließend reponieren muss. Der Verdrehsicherungsbereich verhindert zwar eine Verdrehung zwischen dem Implantatteil und dem Aufbauteil um die Mittelachse oder zentrische Achse des Dentalimplantats, durch das Spiel ergeben sich jedoch konstruktionsbedingt winkelmäßige Toleranzen, welche eine exakte und positionsgenaue Montage erschweren oder verhindern können. Als negative Folge würden sich Funktionseinschränkungen, zum Beispiel hinsichtlich der Okklussion ergeben. Zusätzlich benötigt der durch die beiden miteinander in Eingriff bringbaren Verdrehsicherungsbereiche ausgebildete Rotationsschutz ein gewisses Spiel, um, wie erwähnt, die Montage zu ermöglichen und um insbesondere auch eine Abdichtung zwischen dem Implantatteil und Aufbauteil zu ermöglichen. Bei einer Presspassung zwischen dem Implantatteil und dem Aufbauteil wäre die Dichtfunktion beeinträchtigt.

Weiterhin ist bei den aus dem Stand der Technik bekannten Konstruktionen zu beachten, dass das Spiel zwischen den Verdrehsicherungsbereichen (Rotationsspiel) zu Fehlern führt, welche sich in den nachfolgenden Schritten addieren. Diese Fehleraddition ergibt sich beispielsweise durch die folgende Abformung, Erstellung und Einsatz eines Meistermodells mit Laboranalog in ein Modell, die Präparation des Abutments und den Einsatz des Abutments beim Patienten. Dies kann im ungünstigsten Fall zu einer Vervierfachung des toleranzbedingten maximalen Fehlers führen, so dass zum Beispiel ein maximales Toleranzfeld von 5° im ungünstigsten Fall eine 20° Abweichung bedingt. Daraus kann sich im ungünstigsten Fall ergeben, dass die prothetische Versorgung, beispielsweise eine Krone, nicht mehr passt. Es ergibt sich beim Stand der Technik somit, dass eine hundertprozentige Reponierung nicht sichergestellt werden kann.

Der Erfindung liegt die Aufgabe zugrunde, ein zweiteiliges Dentalimplantat der eingangs genannten Art zu schaffen, welches bei einfachem Aufbau und einfacher, kostengünstiger Herstellbarkeit die Nachteile des Standes der Technik vermeidet und eine exakte, spielfreie Zuordnung zwischen dem Implantatteil und dem Aufbauteil sicherstellt.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass zumindest einer der radialen Vorsprünge und/oder Rücksprünge des zweiten Verdrehsicherungsbereichs des Aufbauteils über zumindest einen Teil der axialen Länge mit einem Drall versehen ist.

Beim Stand der Technik weisen die beiden Verdrehsicherungsbereiche, welche, wie erwähnt, Vorsprünge und/oder Rücksprünge aufweisen, über ihre axiale Länge jeweils einen gleichbleibenden Querschnitt auf. Dies insbesondere auch deshalb, weil der durch die Verdrehsicherungsbereiche gebildete Rotationsschutz selbst nicht tragend und nicht dichtend ist. Diese Funktion wird vielmehr entweder von einer Konusverbindung oder einer Stoßverbindung zwischen dem Implantatteil und dem Aufbauteil gewährleistet. Erfindungsgemäß ist nunmehr vorgesehen, dass der Verdrehsicherungsbereich des Aufbauteils mit einem Drall versehen ist. Bei einem axialen Einschieben des Verdrehsicherungsbereichs des Aufbauteils in den Verdrehsicherungsbereich des Implantatteils erfolgt somit zwangsweise eine Beseitigung des Spiels zwischen den beiden Verdrehsicherungsbereichen, da der mit dem Drall versehene Bereich dieses Spiel kompensiert und gegen die Oberfläche des ersten Verdrehsicherungsbereichs des Implantatteils spielfrei anlegbar ist. Hierdurch wird erfindungsgemäß eine Lösung geschaffen, welche beliebig oft demontierbar und reponierbar ist. Dabei ist im reponierten Zustand eine eindeutige, definierte Position des Aufbauteils relativ zu dem Implantatteil sichergestellt, welche nur geringste Toleranzen aufweist und eine exakte Erstellung des weiteren Aufbaus, insbesondere beispielsweise einer Zahnkrone ermöglicht. Die sich aus dem Stand der Technik ergebende Addition von Fehlern wird dabei zuverlässig vermieden.

Bei der erfindungsgemäßen Lösung ergibt sich somit der Vorteil, dass der Aufbauteil in einfacher und sicherer Weise an dem Implantatteil montierbar ist. Die durch den erfindungsgemäßen Drall bewirkte Spielbeseitigung führt dazu, dass während des Einsetzens des Aufbauteils in den Implantatteil das Spiel beim Eindrücken und beim nachfolgenden Einschrauben der Befestigungsschraube abnimmt und im fertig montierten Zustand nicht mehr oder nahezu nicht mehr vorhanden ist.

Die erfindungsgemäße Lösung ist unabhängig davon, ob die Dichtung zwischen dem Implantatteil und dem Aufbauteil durch miteinander in Eingriff bringbare Konusse oder durch eine Stoßverbindung in eine Radialebene zur zentrischen Achse erfolgt. Deshalb ist die Erfindung bei unterschiedlich konstruierten zweiteiligen Dentalimplantaten unabhängig von der weiteren Ausgestaltung der Implantate anwendbar.

In besonders günstiger Ausgestaltung der Erfindung ist vorgesehen, dass alle Vorsprünge und/oder Rücksprünge des zweiten Verdrehsicherungsbereichs des Aufbauteiles mit dem Drall versehen sind. Es ergibt sich somit eine gleichmäßige Spielbeseitigung um den gesamten Umfang. Dabei ist es besonders günstig, wenn die Vorsprünge und/oder Rücksprünge gleichmäßig um den Umfang des ersten bzw. des zweiten Verdrehsicherungsbereichs verteilt angeordnet sind. In günstiger Ausgestaltung sind vier derartige Paarungen eines Vorsprungs und eines Rücksprungs vorgesehen, so dass sich eine kleeblattartige Querschnittsform ausbildet. Besonders günstig ist es, wenn die Vorsprünge und/oder Rücksprünge in Form von Kreisabschnitten ausgestaltet sind.

Der Drallwinkel α beträgt, bezogen auf die zentrische Achse des Implantats, bevorzugt zwischen 10° und 16°. Der Drallwinkel kann abhängig von unterschiedlichen Durchmessern des Verdrehsicherungsbereiches entsprechend angepasst werden, so dass sich beispielsweise bei kleineren Implantaten ein Drallwinkel zwischen 14° und 16° und bei größeren Implantaten zwischen 10° und 12° als bevorzugt erwiesen hat. In einer radialen Schnittebene durch den zweiten Verdrehsicherungsbereich des Aufbauteils ergibt ein in Umfangsrichtung gemessener Bogenwinkel β, welcher bevorzugt zwischen 4° und 8° beträgt. Bei kleineren Implantaten beträgt der Bogenwinkel β bevorzugt 7° bis 8°, bei größeren Implantaten zwischen 4° und 5°.

Um das Einführen des Aufbauteils in die Ausnehmung des Implantatteils zu erleichtern, ist es günstig, wenn am distalen Endbereich des Aufbauteils ein zylindrischer, mit der Ausnehmung des Implantatteils in Eingriff bringbarer Führungsansatz ausgebildet ist. An diesen schließt sich dann der Verdrehsicherungsbereich an. Dieser ist bevorzugt in einem distalen Bereich ohne Drall ausgebildet, um ein Einstecken und Einführen in den Verdrehsicherungsbereich des Implantatteils zu erleichtern. Bei einem weiteren axialen Einschieben des Aufbauteils kommt dann ein sich anschließender, mit dem erfindungsgemäßen Drall versehener Bereich in Eingriff.

Im Folgenden wird die Erfindung anhand eines Ausführungsbeispiels in Verbindung mit der Zeichnung beschrieben. Dabei zeigt:
- Fig. 1: eine vereinfachte Axialschnittansicht eines zweiteiligen Dentalimplantats gemäß dem Stand der Technik,
- Fig. 2: eine Axialschnitt-Teilansicht, analog Fig. 1, eines Ausführungsbeispiels der Erfindung,
- Fig. 3: eine vereinfachte Teil-Seitenansicht des erfindungsgemäßen Verdrehsicherungsbereichs,
- Fig. 4: eine perspektivische Ansicht des Verdrehsicherungsbereichs des Aufbauteils analog Fig. 3, und
- Fig. 5: eine Radialschnittansicht zur Verdeutlichung der Spielbeseitigung.

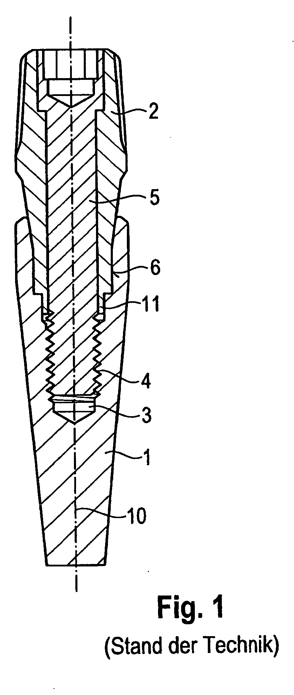

Die Fig. 1 zeigt ein zweiteiliges Dentalimplantat gemäß dem Stand der Technik. Dieses umfasst einen Implantatteil 1 sowie einen Aufbauteil 2. Der Implantatteil 1 ist mit einem Außengewinde versehen, welches in Fig. 1 nicht dargestellt ist und dient dazu, in einem Kieferknochen eines Patienten eingeschraubt zu werden.

Der Implantatteil 1 weist eine zentrische Ausnehmung 3 auf, welche über einen Teil ihrer axialen Länge mit einem Innengewinde 4 versehen ist. Angrenzend an das Innengewinde 4, in welches eine Befestigungsschraube 5 einschraubbar ist, ist ein erster Verdrehsicherungsbereich 6 ausgebildet. Dieser umfasst radiale Vorsprünge sowie radiale Rücksprünge und ist komplementär zu einem Verdrehsicherungsbereich des Aufbauteils 2 ausgebildet. Die Ausgestaltung der Verdrehsicherungsbereiche wird in den nachfolgenden Figuren anhand des Ausführungsbeispiels im Einzelnen erläutert.

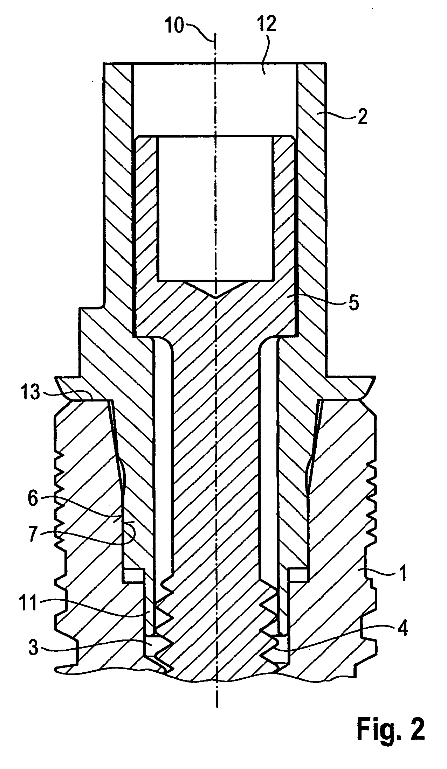

Die Fig. 2 zeigt eine Teil-Schnittansicht analog Fig. 1 eines Ausführungsbeispiels der Erfindung. Dabei ist ersichtlich, dass die Befestigungsschraube 5 eine axiale Ausnehmung 12 des Aufbauteils 2 durchgreift, um den Aufbauteil 2 an dem Implantatteil 1 zu befestigen.

Der Aufbauteil 2 weist an seinem distalen Ende einen rohrförmigen Führungsansatz 11 auf, welcher die Montage und Positionierung erleichtert und in die zentrische Ausnehmung 3 des Implantatteils 1 einführbar ist. Angrenzend an den Führungsansatz 11 ist an dem Aufbauteil 2 ein zweiter Verdrehsicherungsbereich 7 ausgebildet, welcher hinsichtlich seiner grundsätzlichen Ausgestaltung komplementär zu dem ersten Verdrehsicherungsbereich 6 des Implantatteils ausgestaltet ist.

Eine Abdichtung zwischen dem Implantatteil 1 und dem Aufbauteil 2 erfolgt bei dem gezeigten Ausführungsbeispiel mittels einer Stoßdichtung 13, bei welcher plane Flächen, welche in einer Radialebene, bezogen auf eine zentrische Achse 10 angeordnet sind, gegeneinander gepresst werden. Analog ist es auch möglich, eine Abformung mittels zweier Konusflächen vorzusehen.

Es versteht sich, dass erfindungsgemäß anstelle des Aufbauteils 2 zum Zwecke der Abformung und Präparation des weiteren Aufbaus auch ein Abformpfosten oder ein weiteres Element einsetzbar ist, welches in gleicher Weise wie der hier beschriebene Aufbauteil ausgebildet ist und einen identischen zweiten Verdrehsicherungsbereich umfasst.

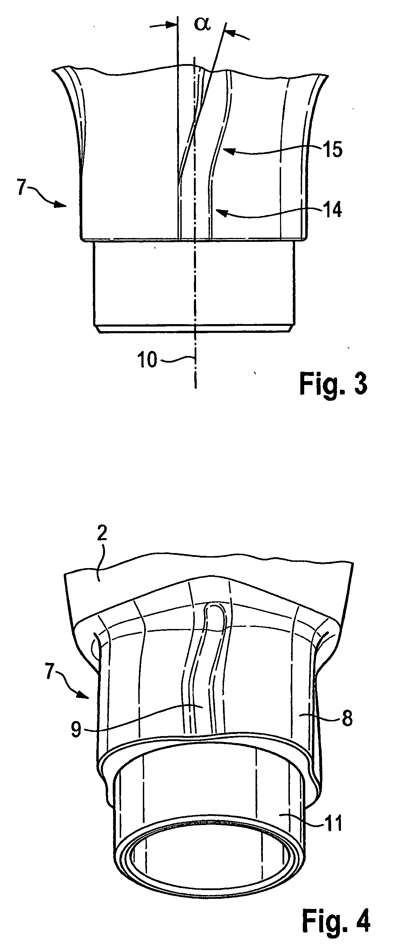

Die Fig. 3 bis 5 zeigen jeweils Detailansichten des erfindungsgemäßen zweiten Verdrehsicherungsbereichs 7 des Aufbauteils 2. Aus Fig. 4 ist dabei ersichtlich, dass der zweite Verdrehsicherungsbereich radiale Vorsprünge 8 sowie radiale Rücksprünge 9 aufweist. Diese sind jeweils aus Kreisbögen aufgebaut und führen somit zu konvexen Auswölbungen bzw. zu konkaven Vertiefungen. Insgesamt ergibt sich eine kleeblattartige Ausgestaltung.

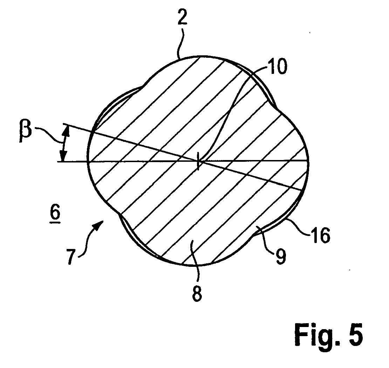

Wie sich insbesondere aus Fig. 3 ergibt, weist der zweite Verdrehsicherungsbereich 7 einen distalen Bereich 14 auf, bei welchem die radialen Vorsprünge 8 und die radialen Rücksprünge 9 (siehe Fig. 4) parallel zur zentrischen Achse 10 ausgebildet sind und keinen Drall aufweisen. Dieser distale Bereich 14 dient zum Einstecken und Einführen des Aufbauteils 2 in das Implantteil 1. Anschließend an den distalen Bereich 14 ist ein Drallbereich 15 ausgebildet, bei welchem die radialen Vorsprünge 8 und die radialen Rücksprünge 9 hinsichtlich ihrer Längsachsen um einen Drallwinkel α angestellt oder versetzt sind. Bei einem axialen Einschieben des zweiten Verdrehsicherungsbereichs 7 in den ersten Verdrehsicherungsbereich 6 des Implantatteils 1 und bei einem Festschrauben mittels der Befestigungsschraube 5 erfolgt somit eine Spielbeseitigung, so wie dies nachfolgend im Zusammenhang mit Fig. 5 beschrieben wird.

Die Fig. 5 zeigt eine Radialschnittebene eines Radialschnitts durch den Drallbereich 15. Dabei ist durch die Innenkontur der zweite Verdrehsicherungsbereich 7 des Aufbauteils 2 dargestellt. Zur Verdeutlichung zeigt die Umgebung dieser Kontur in schematischer Weise den ersten Verdrehsicherungsbereich 6 des Implantatteils 1. Es ist ersichtlich, dass der Bogenwinkel β den Versatz verdeutlicht, welcher sich durch den Drall ergibt. Durch die Schattenkonturen ist dargestellt, dass das Spiel 16 durch die Verdrallung und die Verdrehung um den Bogenwinkel β nahezu Null reduziert wird, so dass die radialen Vorsprünge und radialen Rücksprünge der beiden Verdrehsicherungsbereiche 6 und 7 spielfrei gegeneinander liegen.

### Bezugszeichenliste

- 1: Implantatteil
- 2: Aufbauteil
- 3: zentrische Ausnehmung
- 4: Innengewinde
- 5: Befestigungsschraube
- 6: erster Verdrehsicherungsbereich
- 7: zweiter Verdrehsicherungsbereich
- 8: radialer Vorsprung / konvexe Auswölbung
- 9: radialer Rücksprüng / konkave Vertiefung
- 10: zentrische Achse
- 11: Führungsansatz
- 12: axiale Ausnehmung
- 13: Stoßdichtung
- 14: distaler Bereich
- 15: Drallbereich
- 16: Spiel
- α: Drallwinkel
- β: Bogenwinkel

## Patentansprüche

1. Zweiteiliges Dentalimplantat, mit einem Implantatteil (1) und einem Aufbauteil (2), wobei der Implantatteil (1) eine zentrische axiale Ausnehmung (3), welche mit einem Innengewinde (4) für eine Befestigungsschraube (5) versehen ist, sowie einen ersten Verdrehsicherungsbereich (6) aufweist, welcher über seine axiale Länge mit einem gleichbleibenden Querschnitt mit radialen Vorsprüngen und / oder Rücksprüngen versehen ist, wobei der Aufbauteil (2) einen rohrförmigen zweiten Verdrehsicherungsbereich (7) aufweist, welcher mit im Querschnitt zu dem ersten Verdrehsicherungsbereich (6) passenden radialen Vorsprüngen (8) und / oder Rücksprüngen (9) versehen ist, **dadurch gekennzeichnet, dass** zumindest einer der radialen Vorsprünge (8) und / oder Rücksprünge (9) des zweiten Verdrehsicherungsbereichs (7) des Aufbauteils (2) über zumindest einen Teil der axialen Länge mit einem Drall versehen ist.

2. Dentalimplantat nach Anspruch 1, **dadurch gekennzeichnet, dass** alle radialen Vorsprünge (8) und / oder radialen Rücksprünge (9) des Aufbauteils (2) mit einem Drall versehen sind.

3. Dentalimplantat nach Anspruch 1 oder 2, **dadurch gekennzeichnet, dass** die Vorsprünge (8) und / oder die Rücksprünge (9) gleichmäßig um den Umfang des zweiten Verdrehsicherungsbereichs (7) verteilt angeordnet sind.

4. Dentalimplantat nach der Ansprüche 1 bis 3, **dadurch gekennzeichnet, dass** die Vorsprünge (8) und / oder die Rücksprünge (9) die Form von Kreisabschnitten aufweisen.

5. Dentalimplantat nach der Ansprüche 1 bis 4, **dadurch gekennzeichnet, dass** der Drall mit einem Drallwinkel (α) zwischen 10° und 16° zur zentrischen Achse (10) ausgebildet ist.

6. Dentalimplantat nach der Ansprüche 1 bis 5, **dadurch gekennzeichnet, dass** die Vorsprünge (8) und / oder die Rücksprünge (9) in einer radialen Schnittebene um einen Bogenwinkel (β) zwischen 4° und 8° verdrallt sind.

7. Dentalimplantat nach der Ansprüche 1 bis 6, **dadurch gekennzeichnet, dass** am distalen Endbereich des Aufbauteils (2) ein zylindrischer, mit der Ausnehmung (3) des Implantatbereichs (1) in Eingriff bringbarer Führungsansatz (11) ausgebildet ist.

## Claims

1. Two-part dental implant, comprising an implant part (1) and a construction part (2), the implant part (1) having a central axial clearance (3), provided with an internal thread (4) for a fixing screw (5), and a first anti-twist region (6), provided over the axial length thereof with a constant cross section having radial projections and/or recesses, the construction part (2) having a tubular second anti-twist region (7), provided with radial projections (8) and/or recesses (9) matching the first anti-twist region (6) in cross section, **characterised in that** at least one of the radial projections (8) and/or recesses (9) in the second anti-twist region (7) of the construction part (2) is provided with a twist over at least part of the axial length.

2. Dental implant according to claim 1, **characterised in that** all radial projections (8) and/or radial recesses (9) of the construction part (2) are provided with a twist.

3. Dental implant according to either claim 1 or claim 2, **characterised in that** the projections (8) and/or recesses (9) are arranged uniformly distributed around the circumference of the second anti-twist region (7).

4. Dental implant according to any of claims 1 to 3, **characterised in that** the projections (8) and/or recesses (9) are in the form of circle segments.

5. Dental implant according to any of claims 1 to 4, **characterised in that** the twist is formed with a twist angle (α) of between 10° and 16° with respect to the central axis (10).

6. Dental implant according to any of claims 1 to 5, **characterised in that** the projections (8) and/or recesses (9) are twisted through an arc angle (β) of between 4° and 8° in a radial section plane.

7. Dental implant according to any of claims 1 to 6, **characterised in that** a cylindrical guide attachment (11), which can be brought into engagement with the clearance (3) in the implant region (1), is formed on the distal end region of the construction part (2).

## Revendications

1. Implant dentaire en deux parties, comprenant une partie d'implant (1) et une partie de montage (2), dans lequel la partie d'implant (1) présente un évidement (3) axial central, qui est pourvu d'un filetage intérieur (4) pour une vis de fixation (5), ainsi qu'une première zone anti-rotation (6), qui est pourvue, sur sa longueur axiale, d'une section transversale constante pourvue de parties faisant saillie radiales et/ou de retraits, dans lequel la partie de montage (2) présente une deuxième zone anti-rotation (7) de forme tubulaire, laquelle est pourvue de parties faisant saillie (8) radiales s'adaptant dans la section transversale à la première zone anti-rotation (6) et/ou de retraits (9), **caractérisé en ce qu'**au moins une des parties faisant saillie (8) radiales et/ou au moins un des retraits (9) de la deuxième zone anti-rotation (7) de la partie de montage (2) sont pourvus, sur au moins une partie de la longueur axiale, d'une torsion.

2. Implant dentaire selon la revendication 1, **caractérisé en ce que** toutes les parties faisant saillie (8) radiales et/ou tous les retraits (9) radiaux de la partie de montage (2) sont pourvus d'une torsion.

3. Implant dentaire selon la revendication 1 ou 2, **caractérisé en ce que** les parties faisant saillie (8) et/ou les retraits (9) sont disposés selon une répartition homogène autour de la périphérie de la deuxième zone anti-rotation (7).

4. Implant dentaire selon les revendications 1 à 3, **caractérisé en ce que** les parties faisant saillie (8) et/ou les retraits (9) présentent la forme de sections circulaires.

5. Implant dentaire selon les revendications 1 à 4, **caractérisé en ce que** la torsion est réalisée selon un angle de torsion (α) compris entre 10° et 16° par rapport à l'axe (10) central.

6. Implant dentaire selon les revendications 1 à 5, **caractérisé en ce que** les parties faisant saillie (8) et/ou les retraits (9) sont torsadés dans un plan de coupe radial selon un angle d'arc (ß) compris entre 4° et 8°.

7. Implant dentaire selon les revendications 1 à 6, **caractérisé en ce qu'**un appendice de guidage (11) cylindrique pouvant être amené en prise avec l'évidement (3) de la zone d'implant (1) est réalisé au niveau de la zone d'extrémité distale de la partie de montage (2).
